(19) Europäisches Patentamt / European Patent Office / Office européen des brevets

(11) **EP 4 245 478 B1**

(12) **EUROPEAN PATENT SPECIFICATION**

(45) Date of publication and mention
of the grant of the patent:
**27.08.2025 Bulletin 2025/35**

(21) Application number: **23157879.0**

(22) Date of filing: **22.02.2023**

(51) International Patent Classification (IPC):
***B25J 9/16*** *(2006.01)*

(52) Cooperative Patent Classification (CPC):
**B25J 9/1687**; G05B 2219/40032

(54) **CONTROL APPARATUS FOR AN ASSEMBLY ROBOT COMPRISING A VIRTUAL FORCE SENSOR FOR IMPROVED SURFACE ALIGNMENT**

STEUERUNGSVORRICHTUNG FÜR EINEN MONTAGEROBOTER MIT EINEM VIRTUELLEN KRAFTSENSOR ZUR VERBESSERTEN OBERFLÄCHENAUSRICHTUNG

DISPOSITIF DE COMMANDE POUR UN ROBOT D'ASSEMBLAGE COMPRENANT UN CAPTEUR DE FORCE VIRTUEL POUR AMÉLIORER L'ALIGNEMENT DES SURFACES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.03.2022 JP 2022039059**

(43) Date of publication of application:
**20.09.2023 Bulletin 2023/38**

(73) Proprietor: **OMRON Corporation**
**Kyoto 600-8530 (JP)**

(72) Inventor: **EGI, Mamoru**
**Kyoto-shi, Kyoto, 600-8530 (JP)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
**US-A1- 2016 052 135**

• **GAO WEI ET AL: "kPAM 2.0: Feedback Control for Category-Level Robotic Manipulation", IEEE ROBOTICS AND AUTOMATION LETTERS, IEEE, vol. 6, no. 2, 25 February 2021 (2021-02-25), pages 2962 - 2969, XP011844993, DOI: 10.1109/ LRA.2021.3062315**

## EP 4 245 478 B1

**Description**

The present invention relates to a control apparatus for a robot.

BACKGROUND

Techniques for assembling objects together using a robot have been studied and developed based on the force and the moment detected by a force sensor included in the robot. For example, Patent Literature 1 describes a technique for a robot to move a first object toward a second object and to place, in response to the magnitude of at least one of the force or the moment detected by a force sensor exceeding a predetermined first threshold, a first surface of the first object onto a second surface of the second object under position control and force control based on a predetermined distance and a predetermined speed.

Patent Literature 2 describes a technique for rotating a first object and a second object in contact with each other relative to a specific rotation axis for alignment between the two objects and stopping the rotation in response to the time derivative value of the moment about the rotational shaft exceeding a predetermined threshold.

CITATION LIST

PATENT LITERATURE

Patent Literature 1: Japanese Unexamined Patent Application Publication No. 2017-159426.
Patent Literature 2: Japanese Unexamined Patent Application Publication No. 2013-6231.
Patent Literature 3: Japanese Unexamined Patent Application Publication No. 2016-43455 describes an approach to robot and robot system design, focusing on the issue of fitting components together when they don't have curved surfaces.

US2016052135 relates to robot and robot system designed to improve assembly tasks, in particular involving fitting components together without the need for curved surfaces.

GAO WEI ET AL, "kPAM 2.0: Feedback Control for Category-Level Robotic Manipulation", IEEE ROBOTICS AND AUTOMATION LETTERS, IEEE, (20210225), vol. 6, no. 2, relates to kPAM 2.0, a framework for robotic manipulation that would enable robots to adaptively handle a variety of objects for precise, contact-rich tasks, despite significant intra-category shape, size, and appearance variations.

SUMMARY

TECHNICAL PROBLEM

In surface alignment in which a robot grips one object with its gripper while controlling the position of the object relative to another object to align the surfaces of the objects, the gripped object is placed into contact with the other object and then rotated about a predetermined axis based on the force and the moment detected by a force sensor. This aligns the surface of the gripped object with the surface of the other object. However, appropriate detection of the moment and the force for rotating the gripper for surface alignment may be difficult depending on the correlation between the position of a control point set for the gripper to control the robot and the position at which the force or the moment is detected by the force sensor. Thus, the surface alignment between the objects may not be achieved or may take long time.

In response to the above issue, one or more aspects of the present invention are directed to a control apparatus for controlling a robot gripping one of two objects to perform appropriate surface alignment between the two objects.

SOLUTION TO PROBLEM

The control apparatus according to the invention is defined in independent claim 1. Preferred embodiments of the invention are defined in dependent claims 2 to 6. A control apparatus according to one aspect of the present disclosure controls a robot including a gripper to grip a first object and a force sensor to detect a force and a moment acting on the gripper. The control apparatus includes a virtual sensor associated with the force sensor and set on a control plane for predetermined control to control a position of the first object relative to a second object by rotating the first object relative to the second object to cause a first surface of the first object gripped by the gripper to abut on a second surface of the second object, and a controller that performs the predetermined control based on a detection result from the virtual sensor using a control point set on the control plane based on a state of the first object being gripped by the gripper. The virtual sensor is projected on an imaginary line at a projection position between a predetermined contact point and the control point in an extending direction of the imaginary line on the control plane. The imaginary line is a line connecting the predetermined contact point and the control point. The predetermined contact point is a contact point between the first object and the second object and set on the control plane to place the first object into contact with the second object before the first surface abuts on the second surface in the predetermined control.

The control apparatus with this structure uses a virtual sensor for control. The virtual sensor is associated with a physical force sensor. The virtual sensor is defined based on geometric conditions such as the positions of the force sensor and the gripper in the robot and their setting positions on the control plane. The geometric conditions are used to derive, through a predetermined conversion process performed by the controller, a detection result from the virtual sensor based on a detection result from the force sensor. The control plane is defined for predetermined control for surface alignment of the first object gripped by the gripper relative to the second object. The control plane may be defined based on the movement of the robot in the predetermined control. For example, for the predetermined control to rotate the first object to perform surface alignment of the gripped first object relative to the second object, the control plane is defined as a plane orthogonal to the rotation axis. The control plane has a control point, a predetermined contact point, and a virtual sensor set on the plane. Such parameters for the predetermined control set on the two-dimensional control plane allow the predetermined control to be performed appropriately.

The control point, the predetermined contact point, and the virtual sensor are set on the control plane to allow the projection position of the virtual sensor onto the imaginary line on the control plane to be between the predetermined contact point and the control point in the direction of the imaginary line. The control point is the tool center point as a representative point for control used to control the robot gripping the first object. The predetermined contact point represents the position at which the first object and the second object are placed into contact with each other to temporarily define their relative positions before causing the first surface and the second surface to abut on each other in the predetermined control. The predetermined contact point is a point set for control and is distinguished from the point at which the first object and the second object are actually in contact with each other (hereafter referred to as an actual contact point).

Under the actual predetermined control, errors can occur in gripping of the first object with the gripper and in the relative positional relationship between the first object and the second object in surface alignment. The actual contact point between the first object and the second object may thus deviate from the predetermined contact point for control. However, the control apparatus according to one or more embodiments of the present disclosure sets the positional relationship between the control point, the predetermined contact point, and the virtual sensor as described above. Any deviation within a predetermined degree thus does not prevent the virtual sensor from appropriately detecting the moment for controlling the rotation of the first object relative to the second object in the predetermined control. This allows appropriate surface alignment between the first object and the second object in the predetermined control.

The virtual sensor may be located between a predetermined projection point on the control plane at which the force sensor is projected and the control point. This structure allows the virtual sensor to detect a moment for controlling the rotation of the first object relative to the second object more accurately in the predetermined control.

In any of the control apparatuses described above, the controller may adjust, as an example process performed by the controller, an angle of movement of the first object relative to the second object based on a change of a direction of a moment about the virtual sensor in controlling the position of the first object relative to the second object. Adjusting the angle of movement in this manner allows the first object to move toward the second object readily, thus achieving appropriate surface alignment between the two objects. The controller may perform other processes.

The first object may have a third surface different from the first surface. The second object may have a fourth surface different from the second surface. The fourth surface may face the third surface in the predetermined control. The control point may be set at a predetermined point on an intersection line between the first surface and the third surface or at a position on the control plane at which a predetermined point on a connecting surface connecting the first surface and the third surface is projected. This structure allows corners of the first object and the second object or other portions with their surfaces changing greatly to be aligned with each other for surface alignment between the first object and the second object.

In one example, the first object may be a prism having the first surface and the third surface adjoining each other as side surfaces of the prism. The second object may have a hole having inner surfaces including the second surface and the fourth surface adjoining each other to allow insertion of the first object into the hole. In this case, the controller may align the first surface of the first object with the second surface of the second object and the third surface of the first object with the fourth surface of the second object in the predetermined control, and insert the first object into the hole of the second object. The first object and the second object may have shapes different from the shapes described in this example.

In any of the control apparatuses described above, the controller may control the position of the first object relative to the second object to cause a first external force calculated by the virtual sensor and acting between the first surface and the second surface to be greater than a second external force calculated by the virtual sensor and acting between the third surface and the fourth surface in the predetermined control. The first external force and the second external force may be unequal in the predetermined control depending on the difference in relative shape between the first object and the second object. When the relative position is controlled to cause the first external force and the second external force to be equal to each other, the moment detected by the virtual sensor may be inappropriate as a moment for surface alignment. The first external force and the second external force are thus set to differ from each other as described above to allow appropriate surface alignment between the first object and the second object. When any structure such as a protrusion on the third surface or the fourth surface that locally attracts a force and receives a relatively great external force is distant from the virtual sensor, the controller may control the position of the first object relative to the second object to cause the second external force to be zero in the predetermined control. This minimizes the likelihood of the protrusion affecting appropriate surface alignment between the first object and the second object.

ADVANTAGEOUS EFFECTS

The structure according to the above aspects allows the robot gripping one of two objects to perform appropriate surface alignment between the two objects.

BRIEF DESCRIPTION OF THE DRAWINGS

FIG. 1 is a schematic diagram of a system for positioning two objects relative to each other using a robot driven by a control apparatus according to an embodiment of the present disclosure.
FIG. 2 is a functional block diagram of the control apparatus according to the embodiment of the present disclosure.
FIG. 3 is a diagram showing the relative positional relationship between a control point, a predetermined contact point, and a virtual sensor on a control plane defined for predetermined control on a first object relative to a second object.
FIGs. 4Aa to 4Ad are diagrams describing first correlation of the first object relative to the second object in the predetermined control performed on the two objects with the robot.
FIGs. 4Ba and 4Bb are diagrams describing second correlation of the first object relative to the second object under predetermined control performed on the two objects with the robot.
FIG. 5A is a diagram describing a first contact state between the first object and the second object in the predetermined control performed on the two objects with the robot.
FIG. 5B is a diagram describing a second contact state between the first object and the second object in the predetermined control performed on the two objects with the robot.
FIG. 6 is a diagram describing a contact state between the first object and the second object under predetermined control in a comparative example.
FIG. 7 is a flowchart showing the predetermined control with the robot performed by the control apparatus according to the embodiment of the present disclosure.
FIG. 8 is a flowchart showing an alignment operation included in the predetermined control in FIG. 7.
FIG. 9 is a diagram describing a third contact state between the first object and the second object in the predetermined control performed on the two objects with the robot.
FIG. 10A is a diagram of a fourth contact state between the first object and the second object in a surface alignment process for the two objects performed with the robot.
FIG. 10B is a diagram of a fifth contact state between the first object and the second object in a surface alignment process for the two objects performed with the robot.
FIG. 10C is a diagram of a sixth contact state between the first object and the second object in a surface alignment process for the two objects performed with the robot.

DETAILED DESCRIPTION

One or more embodiments of the present disclosure will now be described in detail with reference to the drawings. The same reference numerals denote the same or corresponding components in the drawings, and such components will not be described repeatedly. A control apparatus 10 according to the embodiments of the present disclosure drives a single robot in one example system, but may drive multiple robots.

First Embodiment

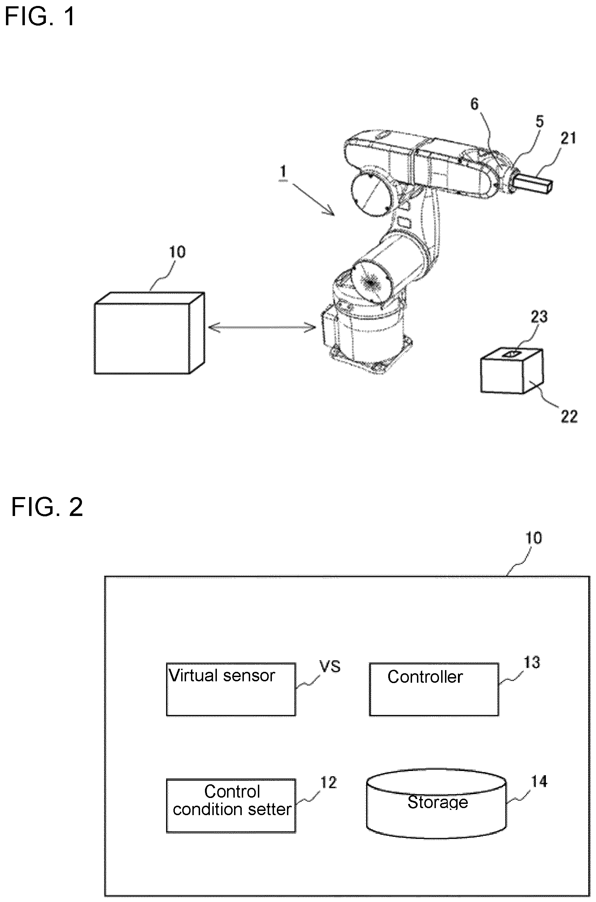

FIG. 1 is a diagram of an example system including a robot 1 controllable by the control apparatus 10 according to an embodiment of the present disclosure. The system includes the robot 1 and the control apparatus 10. The robot 1 includes an articulated arm with six axes and a support supporting the arm. The robot 1 may be a Selective Compliance Assembly Robot Arm (SCARA) robot, a cartesian coordinate robot, or any other robot. The cartesian coordinate robot is, for example, a gantry robot.

The arm includes a gripper 5 and a force sensor 6 on its distal end. Each of the six joints of the arm includes an actuator (not shown). The arm is a vertical articulated six-axis arm. The arm operates in six degrees of freedom with the actuators at the six joints operating in coordination with one another. The arm may operate in five or fewer degrees of freedom, or in seven or more degrees of freedom. The arm operating in six degrees of freedom can be in more postures than an arm operating in five or fewer degrees of freedom. The arm can thus, for example, smoothly move and easily avoid interference with objects around the arm. Although an arm with higher degrees of freedom can be controlled to move more precisely, such an arm increases the processing load of control operations. The degree of freedom of the arm may thus be designed to balance between the benefits of the arm movement and the processing load of control operations.

Each of the six actuators of the arm is connected to the control apparatus 10 with a cable to allow communication between the actuator and the control apparatus 10. The actuator is thus driven based on a control signal obtained from the control apparatus 10. Each actuator includes an encoder. Each encoder outputs information indicating the rotation angle of the corresponding actuator to the control apparatus 10.

The gripper 5 is, for example, an end-effector including a tool for griping an object. In some embodiments, the gripper 5 may be an end-effector that can lift an object with air suction or a magnetic force, or any other known end-effector. The gripper 5 is connected to the control apparatus 10 with a cable to allow communication between them. The gripper 5 thus grips or releases a target object based on a control signal obtained from the control apparatus 10.

The force sensor 6 is between the gripper 5 and the distal end of the arm. More specifically, the force sensor 6 is located to detect, through the gripper 5, any external force applied through the object gripped by the gripper 5. The force sensor 6 detects the force and the moment acting on the object gripped by the gripper 5. More specifically, the force sensor 6 detects the magnitude of the force acting on the object gripped by the gripper 5 in each of X-, Y-, and Z-directions in a force detection coordinate system. The force sensor 6 also detects the magnitude of the moment acting on the object gripped by the gripper 5 about each of X-, Y-, and Z-axes. The force sensor 6 outputs data indicating the detected magnitudes (detection values) to the control apparatus 10. The force detection coordinate system is a three-dimensional local coordinate system associated with the force sensor 6 to move together with the force sensor 6.

The control apparatus 10 is a robot controller. The control apparatus 10 obtains information indicating the rotation angle of each actuator from the encoder corresponding to each actuator of the arm. The control apparatus 10 generates a control signal based on the obtained information indicating the rotation angle. The control apparatus 10 transmits the generated control signal to the robot 1 and activates the actuators to operate the robot 1. The control signal may include a control signal for controlling the gripper 5. The control apparatus 10 operates the robot 1 as described above and causes the robot 1 to perform predetermined control. In one or more embodiments of the present disclosure, the predetermined control includes inserting a first object 21 gripped by the gripper 5 into a hole 23 of a second object 22 at a predetermined position.

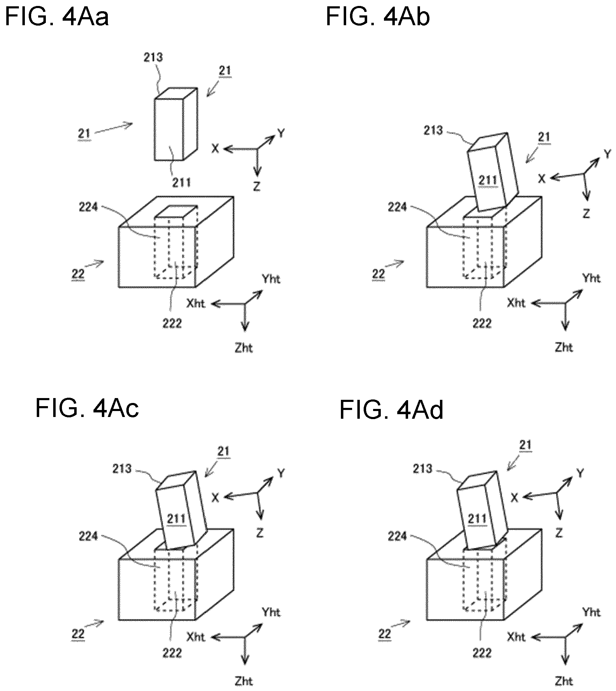

The first object 21 is a prism having a square cross section (refer to FIGs. 4Aa to 4Ad). The second object 22 has the hole 23 for receiving the first object 21 inserted in the axial direction. The hole 23 also has a square cross section larger than the cross section of the first object 21 by a clearance. In the predetermined control, the first object 21 is inserted into the hole 23 after alignment between a surface of the first object 21 and a surface of the second object 22 defining the hole 23. In such a surface alignment process, a first surface 211 of the first object 21 faces a second surface 222 of the second object 22, and a third surface 213 of the first object 21 faces a fourth surface 224 of the second object 22. The predetermined control for inserting the first object 21 into the second object 22 including the surface alignment process will be described in detail later.

The functional components of the control apparatus 10 for the robot 1 will now be described with reference to FIG. 2. FIG. 2 is a functional block diagram of the control apparatus 10. The control apparatus 10 includes a virtual sensor VS, a control condition setter 12, a controller 13, and a storage 14. The virtual sensor VS is associated with the force sensor 6 and set on a control plane for the predetermined control described above. The virtual sensor VS is associated with the force sensor 6 based on the relative positional relationship between the position of the force sensor 6 in the robot 1 and the setting position of the virtual sensor VS. The detection results from the force sensor 6, or more specifically, the detection results for the force and the moment acting on the gripped first object 21, are converted to values that can be detected at the setting point of virtual sensor VS. Such values are used as detection results from the virtual sensor VS. More specifically, the detection results from the force sensor 6 are converted using Formulas 1 to 3 described below.

$$\begin{bmatrix} v_{f_v} \\ v_{n_v} \end{bmatrix} = J_{sv}^T \begin{bmatrix} s_{f_s} \\ s_{n_s} \end{bmatrix} \qquad (1)$$

where $v_{f_v}$ is a force at the position of the virtual sensor in a virtual sensor coordinate system, $v_{n_v}$ is a moment at the position of the virtual sensor in the virtual sensor coordinate system, $s_{f_s}$ is a force detected by the force sensor in a force sensor coordinate system, and $s_{n_s}$ is a moment detected by the force sensor in the force sensor coordinate system.

$$J_{Sv}^T = \begin{bmatrix} v_{R_S} & 0 \\ [v_{P_{Sv}} \times] v_{R_S} & v_{R_S} \end{bmatrix} \qquad (2)$$

where $v_{P_{Sv}}$ is a translation vector from the virtual sensor to the force sensor in the virtual sensor coordinate system, and $v_{R_S}$ is a rotation matrix from the virtual sensor coordinate system to the force sensor coordinate system in the virtual sensor coordinate system.

$$[v_{P_{Sv}} \times] = \begin{bmatrix} 0 & -v_{P_{Sv}(2)} & v_{P_{Sv}(1)} \\ v_{P_{Sv}(2)} & 0 & -v_{P_{Sv}(0)} \\ -v_{P_{Sv}(1)} & v_{P_{Sv}(0)} & 0 \end{bmatrix} \qquad (3)$$

The position of the virtual sensor VS, or more specifically, the setting position of the virtual sensor VS on the control plane, is determined based on the correlation between a control point and a predetermined contact point described below. The control point and the predetermined contact point are parameters set by the control condition setter 12 described below. The control condition setter 12 uses the parameters to determine the setting position of the virtual sensor VS.

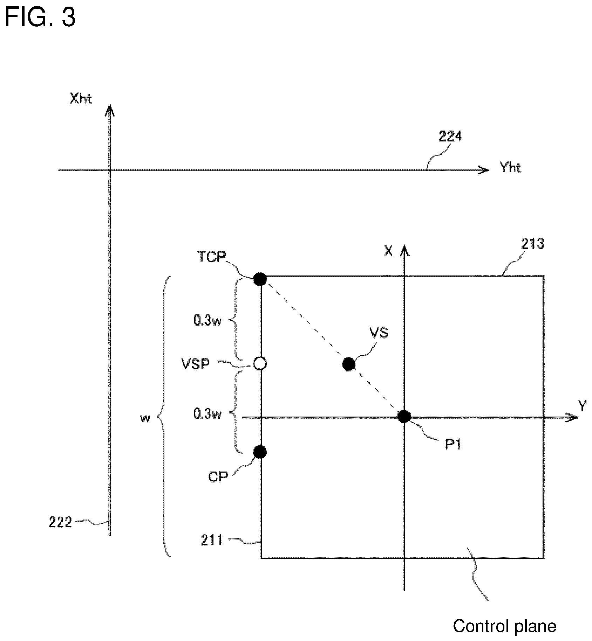

The control condition setter 12 is a functional component that sets control parameters for the predetermined control performed with the robot 1. These control parameters are input by, for example, the user. The control condition setter 12 uses the input values to perform a setting process for control. The control parameters include the position of a control point TCP, the position of the virtual sensor VS, the degree by which the first object 21 is inserted into the hole 23 of the second object 22, a search start angle, and a surface contact force. The parameters will be described sequentially in detail with reference to FIGs. 3 to 4Ad.

FIG. 3 is a diagram showing the relative positional relationship between parameters associated with the predetermined control, such as the control point TCP, the virtual sensor VS, and the predetermined contact point CP on the control plane. The control plane matches a cut surface of the prism-shaped first object 21 gripped by the gripper 5 orthogonal to the axial direction of the first object 21. In other words, the control plane is an XY plane orthogonal to Z-direction of the coordinate axes for the force sensor 6. In FIG. 3, the left side of the control plane corresponds to the first surface 211 of the first object 21, and the upper side of the control plane corresponds to the third surface 213 of the first object 21. In the figure, Xht is X-axis and Yht is Y-axis in the coordinate axes for the second object 22. In FIG. 3, Z-direction of the first object 21 matches Z-direction of the second object 22. The control plane is thus square.

The control point TCP is the tool center point set on the control plane by the control condition setter 12. The control point TCP may be set at a corner of the control plane corresponding to a point on the intersection line between the first surface 211 and the third surface 213 in the predetermined control with the robot 1, or in other words, in the control for inserting the first object 21 gripped by the gripper 5 into the hole 23 of the second object 22. The control point TCP set at the corner of the control plane facilitates positioning of the first surface 211 and the third surface 213 including the control point TCP relative to the second surface 222 and the fourth surface 224 of the second object 22. The control point TCP may be set at a point other than the corner of the control plane depending on the shape of the two objects to undergo the predetermined control.

The degree by which the first object 21 is inserted into the hole 23 of the second object 22 (hereafter, simply referred to as an insertion degree) and the search start angle will now be described. For ease of understanding of the insertion degree and the search start angle, a surface contact process performed in the predetermined control will now be described with reference to FIGs. 4Aa to 4Ad. Although the hole 23 is slightly larger than the first object 21, the slight difference does not easily allow the first object 21 moving downward from immediately above the hole 23 to be smoothly inserted into the hole 23 due to actual tilt of the first object 21 and misalignment between the two objects. The surface contact process described with reference to FIGs. 4Aa to 4Ad is thus performed first in insertion of the first object 21.

As shown in FIG. 4Aa, with Z-directions of the first object 21 and the second object 22 being aligned, the position of the first object 21 is adjusted to immediately above the hole 23. The first object 21 is then moved toward the second object 22. When the two objects are close to each other by a predetermined degree, the first object 21 is tilted at a predetermined angle relative to an XY plane, as shown in FIG. 4Ab. This angle corresponds to the search start angle. In the tilted state, one corner on the bottom surface of the first object 21 is at a lower position than any other corners. The control point TCP is set to correspond to the corner at the lowest point. The search start angle thus represents the angle at which the first object 21 is tilted to place the corner corresponding to the control point TCP at the lowest point. With the first object 21 being tilted, the first object 21 is moved toward the second object 22 until the corner at the lowest point is inserted into the hole 23 by a predetermined degree through the upper portion of the hole 23. This predetermined degree corresponds to the insertion degree. At this time, the first object 21 is yet to be in contact with the second object 22. After the process, the first surface 211 is placed into contact with the second surface 222 as shown in FIG, 4Ac, and the third surface 213 is placed into contact with the fourth surface 224 as shown in FIG. 4Ad.

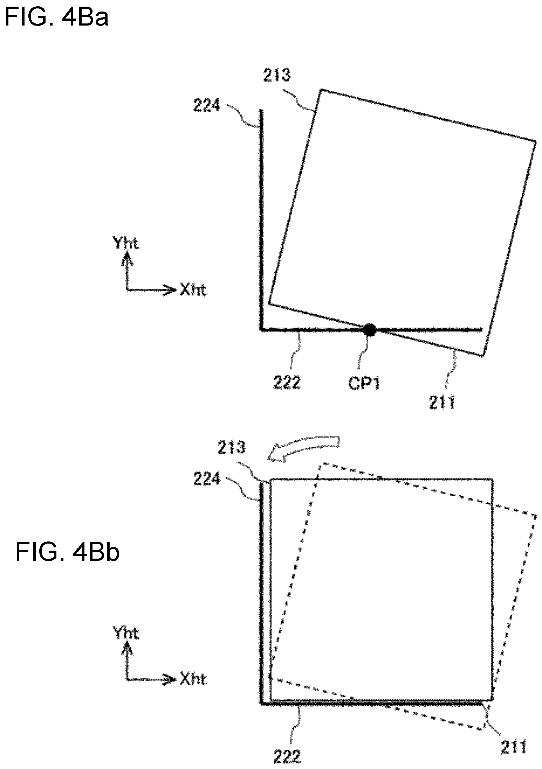

The surface alignment process followed by the surface contact process will now be described with reference to FIGs. 4Ba and 4Bb. For ease of explanation, the surface alignment process is described using a pair of surfaces in contact with each other. FIGs. 4Ba and 4Bb show the first object 21 and the second object 22 in contact with each other as viewed in Z-direction of the second object 22. In FIG. 4Ba, the first object 21 is in contact with the second object 22 through the operation in FIG. 4Ad. The actual contact point is indicated by CP1. The actual contact point CP1 is a contact point between the edge (outline) of the first surface 211 and the edge (outline) of the second surface 222. The surface alignment process includes rotating, relative to each other, the first object 21 and the second object 22 in contact with each other to cause their surfaces (e.g., the first surface 211 and the second surface 222) to abut on each other. The surface alignment process uses the detection results from the virtual sensor VS. This will be described in detail later. In FIG. 4Bb, a broken line indicates the first object 21 before the rotation in the surface alignment process, and a solid line indicates the first object 21 after the rotation. After the rotation, the first surface 211 and the second surface 222 abut on each other.

The surface alignment process in the predetermined control uses the contact point (the actual contact point). To specify the manner in which the first object 21 is placed into contact with the second object 22 before the surface alignment process in the predetermined control, the contact point estimated for control is set as the predetermined contact point. The predetermined contact point may be calculated from geometric conditions such as the shape and dimensions of the first object 21, the shape and dimensions of the second object 22, in particular, the shape and dimensions of the hole 23, the insertion degree, and the search start angle. The control condition setter 12 thus sets the insertion degree and the search start angle, and further determines the predetermined contact point CP (refer to, for example, FIG. 3) based on the results of the settings.

Referring back to FIG. 3, the position of the virtual sensor VS will be described. The virtual sensor VS is set on the control plane to have a projection point VSP of the virtual sensor VS between the control point TCP and the predetermined contact point CP on the imaginary line connecting the control point TCP and the predetermined contact point CP (the straight line corresponding to the first surface 211 in FIG. 3). In the example shown in FIG. 3, the distance between the control point TCP and the projection point VSP is 0.3w, and the distance between the predetermined contact point CP and the projection point VSP is 0.3w, where w is the length (width) of the line segment corresponding to the first surface 211 on the control plane. A projection point P1 of the force sensor 6 on the control plane is at the center of the control plane. The virtual sensor VS is on the line segment connecting the control point TCP and the projection point P1.

The surface contact force will now be described. The surface contact force is an external force acting between the surfaces in contact with each other in the surface alignment process shown in FIG. 4Bb. The surface contact force is detected by the virtual sensor VS and generates a moment about the virtual sensor VS. The moment about the virtual sensor VS is the moment about an axis including the virtual sensor VS and orthogonal to the control plane.

The controller 13 is a functional component that performs the predetermined control using the parameters (the control point TCP, the virtual sensor VS, the insertion degree, the search start angle, and the surface contact force) set by the control condition setter 12. More specifically, the controller 13 functions when a control program stored in the storage 14 is executed by a central processing unit (CPU). The storage 14 also stores positional information and other information provided to the robot for the surface contact process in the predetermined control.

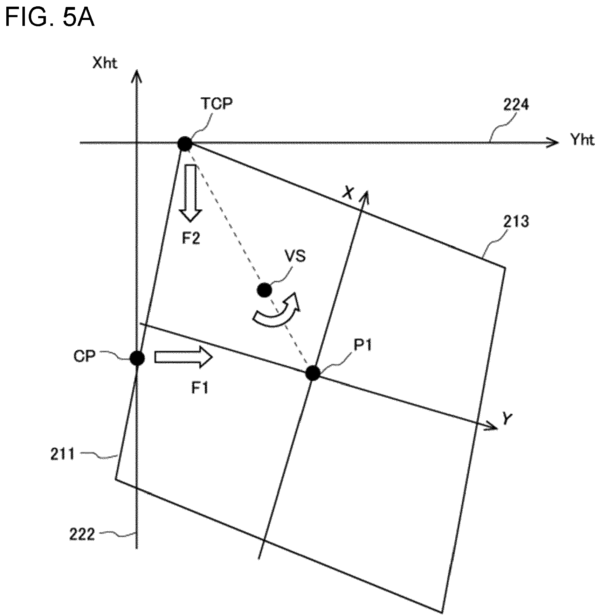

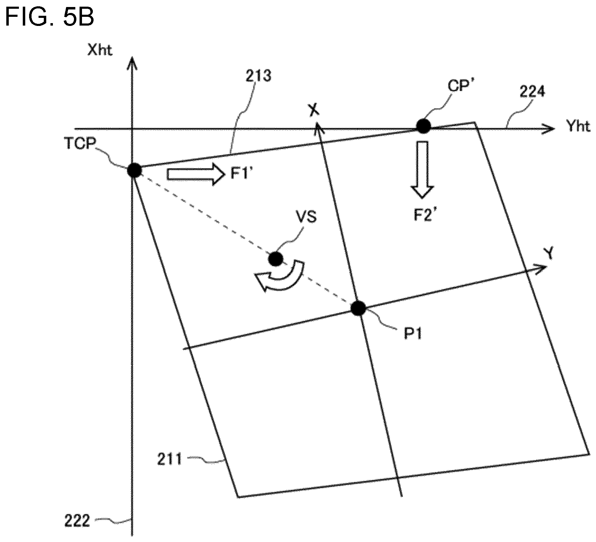

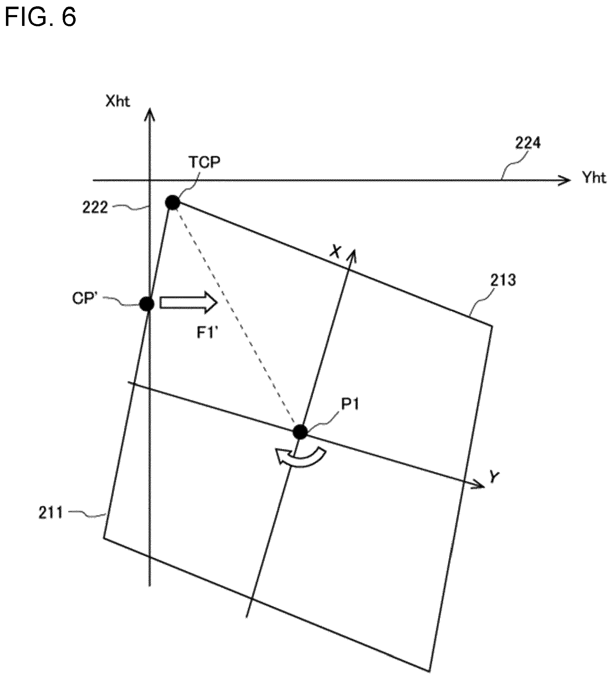

The predetermined control, or in particular, the surface alignment process performed by the controller 13 will now be described in detail with reference to FIGs. 5A to 6. FIGs. 5A and 5B are diagrams describing the surface alignment process performed by the control apparatus 10 according to the embodiment of the present disclosure, or in other words, the surface alignment using the virtual sensor VS. FIG. 6 is a diagram describing surface alignment process using a known force sensor for comparison with the process described with reference to FIGs. 5A and 5B. The force sensor in FIG. 6 is at the same position as the force sensor 6 in the robot 1 in the embodiment of the present disclosure, and thus the projection point of the force sensor on the control plane is at the same position as the projection point P1 shown in, for example, FIG. 5A.

A first surface alignment process using the virtual sensor VS will be described with reference to FIG. 5A. In FIG. 5A, the actual contact point between the first surface 211 and the second surface 222 in the surface contact process matches an estimated predetermined contact point CP. The control point TCP is in contact with the fourth surface 224. Thus, an external force at the predetermined contact point CP received from the second surface 222 acts as indicated by outlined arrow F1, and an external force at the control point TCP received from the fourth surface 224 acts as indicated by outlined arrow F2. These external forces are detection values detected by the virtual sensor VS. The relative positional relationships between the control point TCP, the predetermined contact point CP, and the virtual sensor VS described above allows detection of a counterclockwise moment indicated by the outlined arrow about the virtual sensor VS.

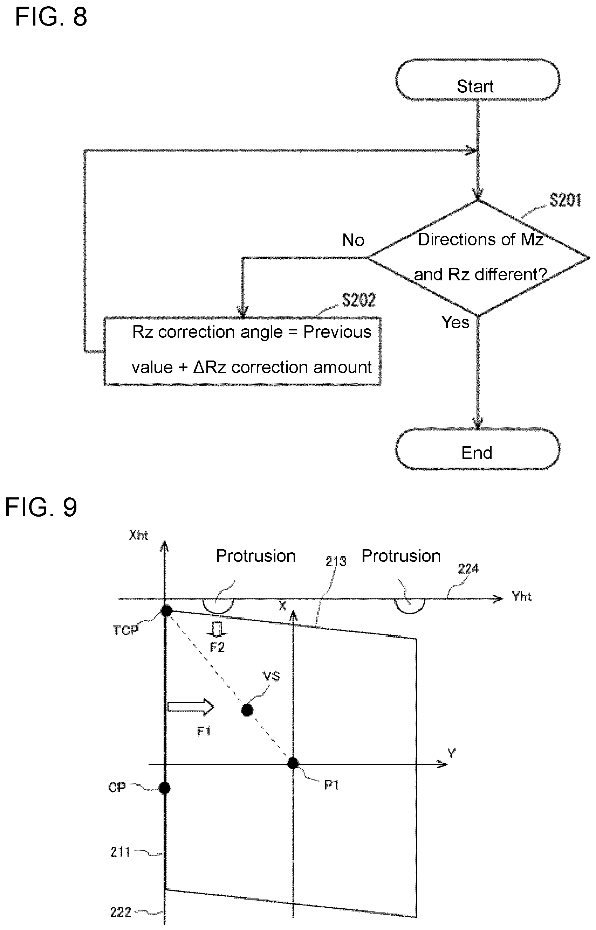

In the surface alignment process, the controller 13 rotates the first object 21 relative to the second object 22 based on the direction of the moment about the virtual sensor VS and the rotation direction of the first object 21 relative to the second object 22 to adjust the external forces from the second surface 222 and the fourth surface 224 to be a surface contact force set by the control condition setter 12. The adjustment of the rotation angle of the first object 21 is described later with reference to FIG. 8. In the example shown in FIG. 5A, the controller 13 rotates the first object 21 counterclockwise while placing the first surface 211 into contact with the second surface 222 and the third surface 213 into contact with the fourth surface 224. This eventually causes the first surface 211 to abut on the second surface 222 and causes the third surface 213 to abut on the fourth surface 224, thus completing the surface alignment process.

In FIG. 5B, the actual contact point CP' between the first surface 211 and the second surface 222 in the surface contact process deviates from the estimated predetermined contact point CP. Such a deviation can result from displacement of the first object 21 gripped by the gripper 5 or misplacement of the first object 21 relative to the second object 22. In this example, the control point TCP is in contact with the second surface 222, and the actual contact point CP' is a point at which the third surface 213 and the fourth surface 224 are in contact with each other. Thus, an external force at the control point TCP received from the second surface 222 acts as indicated by outlined arrow F1', and an external force at the actual contact point CP' received from the fourth surface 224 acts as indicated by outlined arrow F2'. The relative positional relationships between the control point TCP, the predetermined contact point CP, and the virtual sensor VS described above allow detection of a clockwise moment indicated by the outlined arrow about the virtual sensor VS. The controller 13 thus rotates the first object 21 clockwise while placing the first surface 211 into contact with the second surface 222 and the third surface 213 into contact with the fourth surface 224. This eventually causes the first surface 211 to abut on the second surface 222 and causes the third surface 213 to abut on the fourth surface 224, thus completing the predetermined control.

A surface alignment process using a known force sensor will now be described with reference to FIG. 6. In a surface contact process, the actual contact point CP' may deviate from the predetermined contact point and place the first surface 211 into contact with the second surface 222 at a point relatively close to the control point TCP. In this case, an external force F1' from the second surface 222 acts at a point nearer the control point TCP than the projection point P1 of the force sensor. A clockwise moment is thus detected by the force sensor as shown in FIG. 6. A surface alignment process performed in this state rotates the first object 21 in the direction of the moment. This does not easily allow the first surface 211 to abut on the second surface 222.

In the embodiment of the present disclosure, the control apparatus 10 uses the virtual sensor VS to perform the surface alignment process appropriately when the actual contact point deviates from the predetermined contact point in the surface contact process, thus allowing the predetermined control to be complete appropriately.

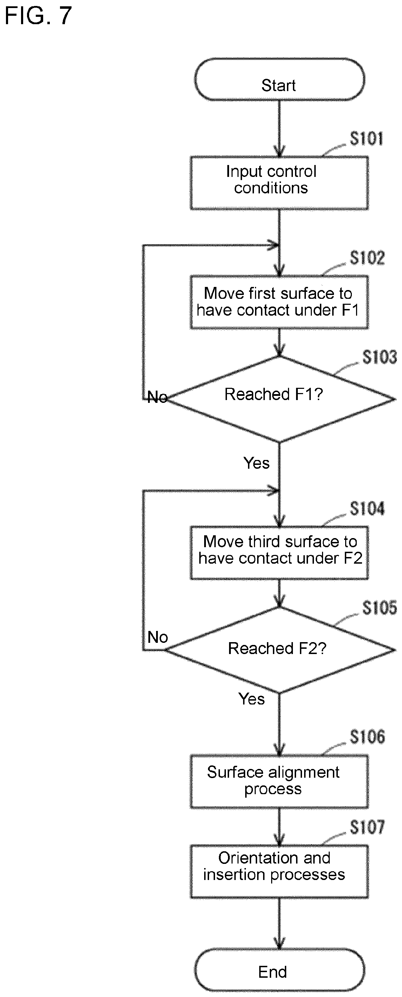

The predetermined control including the surface contact process and the surface alignment process described above will now be described with reference to the flowcharts shown in FIGs. 7 and 8. The predetermined control is performed by the control apparatus 10 when the robot 1 inserts the first object 21 into the hole 23 of the second object 22. In S101, the control conditions for the predetermined control are input. The control conditions include the position of the control point TCP, the position of the virtual sensor VS, the insertion degree by which the first object 21 is inserted into the hole 23 of the second object 22, the search start angle, and the surface contact force set by the control condition setter 12. For the surface contact force, an external force F1 is received from the second surface 222, and an external force F2 is received from the fourth surface 224. In the present embodiment, the structure of the second surface 222 and the fourth surface 224 is substantially the same, and thus the external force F1 and the external force F2 are equal to each other. After S101, the processing advances to S102.

In S102, the surface contact process is performed. The first surface 211 is moved toward the second surface 222 to come in contact with the second surface 222 under the external force F1. Based on the insertion degree and the search start angle set in this state, the lowest point of the first object 21 is inside the hole 23 as shown in FIGs. 4Aa to 4Ad. In S103, the determination is performed as to whether the force applied to the first surface 211 from the second surface 222 has reached the external force F1. The external force F1 is detected by the virtual sensor VS. In response to an affirmative determination result in S103, the processing advances to S104. In response to a negative determination result, the processing in S102 and subsequent steps is repeated.

In S104, the surface contact process is further performed. The third surface 213 is moved toward the fourth surface 224 to come in contact with the fourth surface 224 under the external force F2. In S105, the determination is performed as to whether the force applied to the third surface 213 from the fourth surface 224 has reached the external force F2. The external force F2 is detected by the virtual sensor VS. In response to an affirmative determination result in S105, the processing advances to S106. In response to a negative determination result, the processing in S104 and subsequent steps is repeated. When the determination result in S105 is affirmative, the first object 21 is in contact with the second object 22. The processing from S101 to S105 has set the actual contact point between the first object 21 and the second object 22 at predetermined contact point CP.

In S106, the surface alignment process is performed. The surface alignment process will now be described with reference to FIG. 8. The surface alignment process shown in FIG. 8 includes rotating the first object 21 in contact with the second object 22 in the above manner relative to the second object 22 to cause the first surface 211 to abut on the second surface 222 and cause the third surface 213 to abut on the fourth surface 224. The process shown in FIG. 8 is thus repeated until each surface abuts on the corresponding surface. At the start of the surface alignment process, the initial value of a correction angle Rz for the rotation of the first object 21 relative to the second object 22 on the control plane is set to a predetermined value other than zero.

In S201, the determination is performed as to whether the direction of a moment Mz about the virtual sensor VS under the external forces F1 and F2 is different from the direction of a rotation angle Rz about the virtual sensor VS. When the directions are different, the two surfaces to be aligned, which are in contact with each other, abut on each other. In this case, an affirmative determination result is obtained in S201, and the surface alignment process is complete. When the directions are the same, the two surfaces to be aligned are yet to abut on each other. In this case, a negative determination result is obtained in S201, and the processing advances to S202. In S202, a new correction angle Rz for the first object 21 is calculated by increasing the correction angel Rz by a predetermined correction angle ΔRz. More specifically, when the two surfaces to be aligned are yet to abut on each other, the first object 21 is further rotated to cause the two surfaces to abut on each other. The processing in S201 is then repeated again.

Referring back to the predetermined control shown in FIG. 7, after the surface alignment process is complete in S106, an orientation process and an insertion process are performed in S107. The orientation process is performed to orient the first object 21, which has undergone the surface alignment process, parallel to the second object 22. More specifically, Z-axis of the first object 21 is aligned with Z-axis of the second object 22. The orientation process causes the leading end of the first object 21 to fit into the hole 23 of the second object 22. The insertion process allows the oriented first object 21 to be inserted into the hole 23. More specifically, the first object 21 is inserted under the controlled force to cause the moment Mz about the virtual sensor VS to be zero.

Second Embodiment

A surface alignment process in a second embodiment will now be described with reference to FIG. 9. The surface alignment process is included in the predetermined control performed by the control apparatus 10 according to one or more embodiments of the present disclosure. In the present embodiment, the fourth surface 224 of the second object 22 has multiple protrusions that can interfere with the first object 21 in the hole 23. For example, the protrusions may reduce vibrations of the first object 21 in the hole 23. In this case, a surface alignment process is performed to align the first surface 211 of the first object 21 with the second surface 222 of the second object 22. The first object 21 is in contact with the fourth surface 224 with the protrusions between the first object 21 and the fourth surface 224.

In such a case, the surface contact force F1 associated with the second surface 222 that actually undergoes surface alignment is set by the control condition setter 12 to be greater than the surface contact force F2 associated with the fourth surface 224 having the protrusions. The surface contact force F2 may be set to zero or a value substantially close to zero. When the surface contact forces F1 and F2 are equal to each other as in the first embodiment, a surface contact force acting upon contact of the first object 21 with the protrusions may greatly affect the moment about the virtual sensor VS depending on the positions of the protrusions, such as being relatively distant from the virtual sensor VS. This may not allow surface alignment between the first surface 221 and the second surface 222. The surface contact force F1 associated with the second surface 222 is thus set to be greater than the surface contact force F2 associated with the fourth surface 224 as shown in FIG. 9. This reduces the surface contact force F2 generated at the positions of the protrusions to allow reliable surface alignment between the first surface 211 and the second surface 222 without being affected by the protrusions.

Third Embodiment

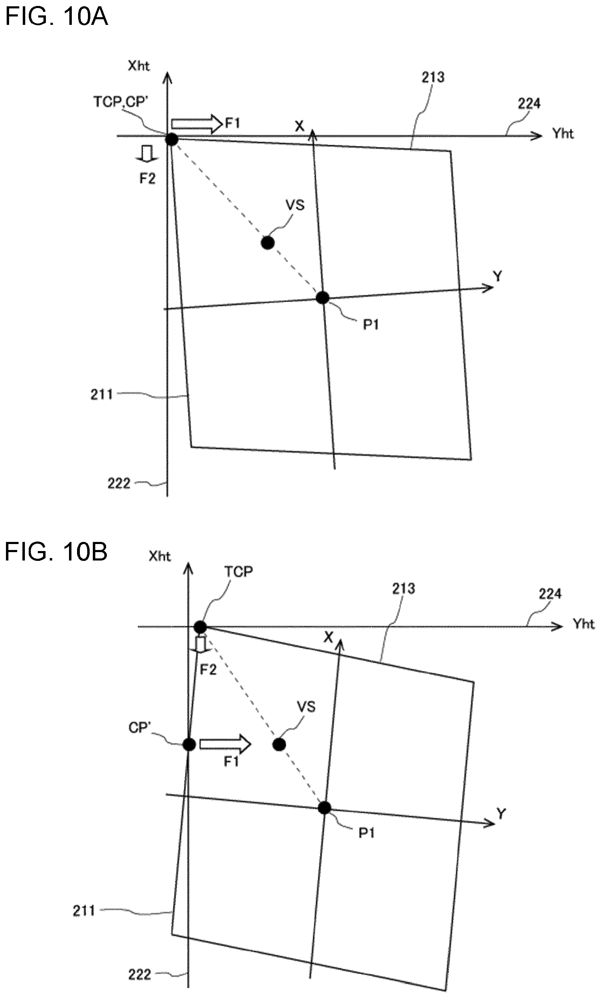

A surface alignment process in a third embodiment will now be described with reference to FIGs. 10A to 10C. The surface alignment process is included in the predetermined control performed by the control apparatus 10 according to one or more embodiments of the present disclosure. In the present embodiment, the second surface 222 and the fourth surface 224 of the second object 22 have no protrusions unlike in the second embodiment, and are flat surfaces as in the first embodiment. In this case, the surface alignment process includes aligning the first surface 211 of the first object 21 with the second surface 222 of the second object 22 and the third surface 213 of the first object 21 with the fourth surface 224 of the second object 22. In this case as well, the surface contact force F1 associated with the second surface 222 that actually undergoes surface alignment may be set by the control condition setter 12 to be greater than the surface contact force F2 associated with the fourth surface 224, or more specifically, the surface contact force F1 may be set to be greater than the surface contact force F2 that has been set to be slightly greater than a frictional force between the first surface 211 and the second surface 222. This allows the surface alignment process to be performed appropriately for any actual contact point CP' deviating from the predetermined contact point CP.

For example, as shown in FIG. 10A, the control point TCP may overlap the actual contact point CP', and the first object 21 may come in contact with the second object 22 at a point on the intersection line between the second surface 222

## EP 4 245 478 B1

and the fourth surface 224. When the surface contact forces F1 and F2 are equal to each other, the moment about the virtual sensor VS is substantially zero. This causes an inappropriate surface alignment process or takes relatively long time for the surface alignment process. In contrast, the surface contact force F1 set to be greater than the surface contact force F2 readily allows the first surface 211 to abut on the second surface 222, thus allowing the surface alignment process to be performed appropriately.

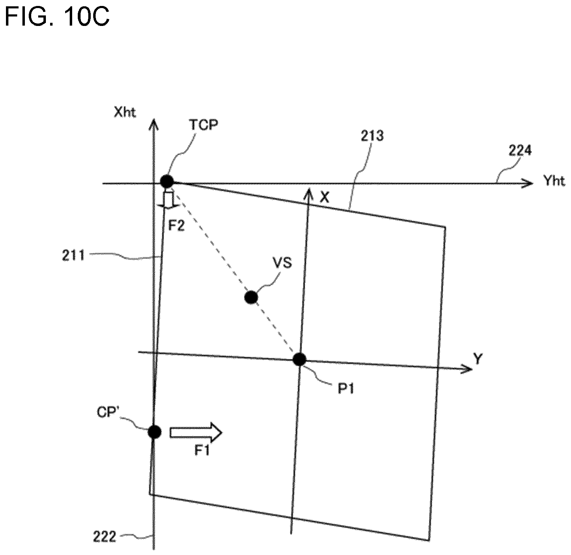

In another example shown in FIG. 10B, the control point TCP is in contact with the fourth surface 224, and the actual contact point CP' is nearer the control point TCP than the predetermined contact point CP. Such a contact state occurs when, for example, the actual insertion degree at the lowest point of the first object 21 is less than the set insertion degree in the surface contact process in the predetermined control. In this case as well, when the actual contact point CP' is at a position to allow the surface contact force F1 acting on the actual contact point CP' to act over the virtual sensor VS, the controller 13 performs the surface alignment process by rotating the third surface 213 toward the fourth surface 214 based on the moment about the virtual sensor VS generated by the surface contact force F2. In the example shown in FIG. 10C, the control point TCP is in contact with the fourth surface 224, and the actual contact point CP' is distant from the predetermined contact point CP. Such a contact state occurs when, for example, the actual insertion degree at the lowest point of the first object 21 is greater than the set insertion degree in the surface contact process in the predetermined control. In this case as well, the controller 13 performs the surface alignment process by rotating the third surface 213 toward the fourth surface 214 based on the moment about the virtual sensor VS generated by the surface contact forces F1 and F2.

As described above, in the control apparatus 10 according to one or more embodiments of the present disclosure, the control condition setter 12 may set one of the surface contact forces F1 and F2 to be greater than the other. This allows the surface alignment process to be performed appropriately.

In the following, an embodiment that does not comprise all the features of the control apparatus according to the invention is presented in summary form.

A control apparatus (10) for controlling a robot (1), the robot (1) including a gripper (5) to grip a first object (21) and a force sensor (6) to detect a force and a moment acting on the gripper (5), the control apparatus (10) comprising:

a virtual sensor (VS) associated with the force sensor (6), the virtual sensor (VS) being set on a control plane for predetermined control to control a position of the first object (21) relative to a second object (22) by rotating the first object (21) relative to the second object (22) to cause a first surface (211) of the first object (21) gripped by the gripper (5) to abut on a second surface (222) of the second object (22); and

a controller (13) configured to perform the predetermined control based on a detection result from the virtual sensor (VS) using a control point (TCP) set on the control plane based on a state of the first object (21) being gripped by the gripper (5),

wherein the virtual sensor (VS) is projected on an imaginary line at a projection position between a predetermined contact point (CP) and the control point (TCP) in an extending direction of the imaginary line on the control plane, the imaginary line is a line connecting the predetermined contact point (CP) and the control point (TCP), and the predetermined contact point (CP) is a contact point between the first object (21) and the second object (22) and set on the control plane to place the first object (21) into contact with the second object (22) before the first surface (211) abuts on the second surface (222) in the predetermined control.

REFERENCE SIGNS LIST

| 1 | robot |
|---|---|
| 5 | gripper |
| 6 | force sensor |
| 10 | control apparatus |
| 12 | control condition setter |
| 13 | controller |
| 21 | first object |
| 22 | second object |
| 23 | hole |
| 211 | first surface |
| 213 | third surface |
| 222 | second surface |
| 224 | fourth surface |
| VS | virtual sensor |

CP      predetermined contact point
CP'     actual contact point
TCP     control point

**Claims**

1.  A control apparatus (10) configured to control a robot (1), the robot (1) including a gripper (5) to grip a first object (21) and a force sensor (6) to detect a force and a moment acting on the gripper (5), the control apparatus (10) comprising:

    a virtual sensor (VS) associated with the force sensor (6), the virtual sensor (VS) being set on a control plane for predetermined control to control a position of the first object (21) relative to a second object (22) by placing the first object (21) into contact with the second object (22), and rotating the first object (21) relative to the second object (22) to cause a first surface (211) of the first object (21) gripped by the gripper (5) to abut on a second surface (222) of the second object (22), the control plane being orthogonal to one of the coordinate axes for the force sensor (6);
    a control condition setter (12) configured to set control parameters for the predetermined control including a Tool Center Point, TCP, and a predetermined contact point (CP); and
    a controller (13) configured to perform the predetermined control based on a detection result from the virtual sensor (VS) using the TCP set on the control plane based on a state of the first object (21) being gripped by the gripper (5),
    wherein the virtual sensor (VS) is projected perpendicularly on an imaginary line at a projection position between the predetermined contact point (CP) and the TCP in an extending direction of the imaginary line on the control plane, the imaginary line is a line connecting the predetermined contact point (CP) and the TCP, and the predetermined contact point (CP) is a contact point between the first object (21) and the second object (22) and set on the control plane to place the first object (21) into contact with the second object (22) before the first surface (211) abuts on the second surface (222) in the predetermined control; and
    wherein the virtual sensor (VS) is located between a predetermined projection point (P1) on the control plane at which the force sensor (6) is projected and the TCP.

2.  The control apparatus (10) according to claim 1, wherein
    the controller (13) is configured to adjust an angle of movement of the first object (21) relative to the second object (22) based on a change of a direction of a moment about the virtual sensor (VS) in controlling the position of the first object (21) relative to the second object (22).

3.  The control apparatus (10) according to claim 2, wherein

    the first object (21) has a third surface (213) different from the first surface (211),
    the second object (22) has a fourth surface (224) to face the third surface (213) in the predetermined control, and the fourth surface (224) is different from the second surface (222), and
    the TCP is set at a predetermined point on an intersection line between the first surface (211) and the third surface (213) or at a position on the control plane at which a predetermined point on a connecting surface connecting the first surface (211) and the third surface (213) is projected.

4.  The control apparatus (10) according to claim 3, wherein

    the first object (21) is a prism having the first surface (211) and the third surface (213) adjoining each other as side surfaces of the prism,
    the second object (22) has a hole (23) having inner surfaces including the second surface (222) and the fourth surface (224) adjoining each other to allow insertion of the first object (21) into the hole (23), and
    the controller (13) is configured to align the first surface (211) of the first object (21) with the second surface (222) of the second object (22) and the third surface (213) of the first object (21) with the fourth surface (224) of the second object (22) in the predetermined control, and to insert the first object (21) into the hole (23) of the second object (22).

5.  The control apparatus (10) according to claim 3 or claim 4, wherein
    the controller (13) is configured to control the position of the first object (21) relative to the second object (22) to cause a first external force (F1) calculated by the virtual sensor (VS) and acting between the first surface (211) and the second surface (222) to be greater than a second external force (F2) calculated by the virtual sensor (VS) and acting between the third surface (213) and the fourth surface (224) in the predetermined control.

**6.** The control apparatus (10) according to claim 5, wherein
the controller (13) is configured to control the position of the first object (21) relative to the second object (22) to cause the second external force (F2) to be zero in the predetermined control.

**Patentansprüche**

**1.** Steuerungsvorrichtung (10), dazu eingerichtet, einen Roboter (1) zu steuern, wobei der Roboter (1) einen Greifer (5) zum Greifen eines ersten Objekts (21) und einen Kraftsensor (6) zum Detektieren einer Kraft und eines Moments, die auf den Greifer (5) wirken, aufweist, wobei die Steuerungsvorrichtung (10) umfasst:

einen virtuellen Sensor (VS), der dem Kraftsensor (6) zugeordnet ist, wobei der virtuelle Sensor (VS) auf einer Steuerungsebene für eine zuvor festgelegte Steuerung eingestellt ist, um eine Position des ersten Objekts (21) relativ zu einem zweiten Objekt (22) zu steuern durch Inkontaktbringen des ersten Objekts (21) mit dem zweiten Objekt (22) und Drehen des ersten Objekts (21) relativ zu dem zweiten Objekt (22), um zu bewirken, dass eine erste Fläche (211) des ersten Objekts (21), das durch den Greifer (5) gegriffen wird, an einer zweiten Fläche (222) des zweiten Objekts (22) anliegt, wobei die Steuerungsebene orthogonal zu einer der Koordinatenachsen für den Kraftsensor (6) verläuft;
eine Steuerungsbedingungseinstellvorrichtung (12), die dazu eingerichtet ist, Steuerungsparameter für die zuvor festgelegte Steuerung, einschließlich eines Werkzeugmittelpunktes (Tool Center Point, TCP) und eines zuvor festgelegten Kontaktpunktes (Contact Point, CP), einzustellen; und
eine Steuerung (13), die dazu eingerichtet ist, die zuvor festgelegte Steuerung auf der Grundlage eines Detektionsergebnisses von dem virtuellen Sensor (VS) unter Verwendung des auf der Steuerungsebene eingestellten TCP auf der Grundlage eines Zustands des ersten Objekts (21), das durch den Greifer (5) gegriffen wird, durchzuführen,
wobei der virtuelle Sensor (VS) senkrecht auf eine imaginäre Linie an einer Projektionsposition zwischen dem zuvor festgelegten Kontaktpunkt (CP) und dem TCP in einer Erstreckungsrichtung der imaginären Linie auf der Steuerungsebene projiziert ist, die imaginäre Linie eine Linie ist, die den zuvor festgelegten Kontaktpunkt (CP) und den TCP verbindet, und der zuvor festgelegte Kontaktpunkt (CP) ein Kontaktpunkt zwischen dem ersten Objekt (21) und dem zweiten Objekt (22) ist und auf der Steuerungsebene eingestellt ist, um das erste Objekt (21) in Kontakt mit dem zweiten Objekt (22) zu bringen, bevor die erste Fläche (211) an der zweiten Fläche (222) in der zuvor festgelegten Steuerung in Anschlag kommt; und
wobei sich der virtuelle Sensor (VS) zwischen einem zuvor festgelegten Projektionspunkt (P1) auf der Steuerungsebene, auf den der Kraftsensor (6) projiziert ist, und dem TCP befindet.

**2.** Steuerungsvorrichtung (10) nach Anspruch 1, wobei
die Steuerung (13) dazu eingerichtet ist, einen Bewegungswinkel des ersten Objekts (21) relativ zu dem zweiten Objekt (22) auf der Grundlage einer Änderung einer Richtung eines Moments um den virtuellen Sensor (VS) beim Steuern der Position des ersten Objekts (21) relativ zu dem zweiten Objekt (22) einzustellen.

**3.** Steuerungsvorrichtung (10) nach Anspruch 2, wobei

das erste Objekt (21) eine dritte Fläche (213) aufweist, die sich von der ersten Fläche (211) unterscheidet,
das zweite Objekt (22) eine vierte Fläche (224) aufweist, die der dritten Fläche (213) bei der zuvor festgelegten Steuerung zugewandt ist, und die vierte Fläche (224) sich von der zweiten Fläche (222) unterscheidet, und
der TCP an einem zuvor festgelegten Punkt auf einer Schnittlinie zwischen der ersten Fläche (211) und der dritten Fläche (213) oder an einer Position auf der Steuerungsebene eingestellt ist, an der ein zuvor festgelegter Punkt auf einer Verbindungsfläche, die die erste Fläche (211) und die dritte Fläche (213) verbindet, projiziert ist.

**4.** Steuerungsvorrichtung (10) nach Anspruch 3, wobei

das erste Objekt (21) ein Prisma ist, bei dem die erste Fläche (211) und die dritte Fläche (213) als Seitenflächen des Prismas aneinander grenzen,
das zweite Objekt (22) ein Loch (23) aufweist, dessen Innenflächen die zweite Fläche (222) und die vierte Fläche (224) aufweisen, die aneinander grenzen, um ein Einführen des ersten Objekts (21) in das Loch (23) zu erlauben, und
die Steuerung (13) dazu eingerichtet ist, die erste Fläche (211) des ersten Objekts (21) auf die zweite Fläche (222) des zweiten Objekts (22) und die dritte Fläche (213) des ersten Objekts (21) auf die vierte Fläche (224) des zweiten Objekts (22) in der zuvor festgelegten Steuerung auszurichten und das erste Objekt (21) in das Loch (23) des zweiten Objekts (22) einzuführen.

5. Steuerungsvorrichtung (10) nach Anspruch 3 oder Anspruch 4, wobei
die Steuerung (13) dazu eingerichtet ist, die Position des ersten Objekts (21) relativ zu dem zweiten Objekt (22) so zu steuern, dass eine erste äußere Kraft (F1), die durch den virtuellen Sensor (VS) berechnet wird und zwischen der ersten Fläche (211) und der zweiten Fläche (222) wirkt, größer ist als eine zweite äußere Kraft (F2), die durch den virtuellen Sensor (VS) berechnet wird und zwischen der dritten Fläche (213) und der vierten Fläche (224) in der zuvor festgelegten Steuerung wirkt.

6. Steuerungsvorrichtung (10) nach Anspruch 5, wobei
die Steuerung (13) dazu eingerichtet ist, die Position des ersten Objekts (21) relativ zu dem zweiten Objekt (22) so zu steuern, dass die zweite äußere Kraft (F2) bei der zuvor festgelegten Steuerung null ist.

**Revendications**

1. Appareil de commande (10) configuré pour commander un robot (1), le robot (1) comportant un organe préhenseur (5) pour saisir un premier objet (21) et un capteur de force (6) pour détecter une force et un moment agissant sur l'organe préhenseur (5), l'appareil de commande (10) comprenant :

un capteur virtuel (VS) associé au capteur de force (6), le capteur virtuel (VS) étant défini sur un plan de commande pour une commande prédéterminée afin de commander une position du premier objet (21) par rapport à un second objet (22) en mettant le premier objet (21) en contact avec le second objet (22), et en faisant tourner le premier objet (21) par rapport au second objet (22) pour amener une première surface (211) du premier objet (21) saisi par l'organe préhenseur (5) à venir en butée contre une deuxième surface (222) du second objet (22), le plan de commande étant orthogonal à l'un des axes de coordonnées pour le capteur de force (6) ;
un paramétreur de condition de commande (12) configuré pour définir des paramètres de commande pour la commande prédéterminée, incluant un point de centre d'outil (Tool Center Point, TCP) et un point de contact (Contact Point, CP) prédéterminé ; et
une commande (13) configurée pour réaliser la commande prédéterminée sur la base d'un résultat de détection provenant du capteur virtuel (VS) en utilisant le TCP défini sur le plan de commande sur la base d'un état du premier objet (21) étant saisi par l'organe préhenseur (5),
dans lequel le capteur virtuel (VS) est projeté perpendiculairement sur une ligne fictive à une position de projection entre le point de contact (CP) prédéterminé et le TCP dans une direction de prolongement de la ligne fictive sur le plan de commande, la ligne fictive est une ligne reliant le point de contact (CP) prédéterminé et le TCP, et le point de contact (CP) prédéterminé est un point de contact entre le premier objet (21) et le second objet (22) et défini sur le plan de commande afin de mettre le premier objet (21) en contact avec le second objet (22) avant que la première surface (211) vienne en butée contre la deuxième surface (222) dans la commande prédéterminée ; et
dans lequel le capteur virtuel (VS) est situé entre un point de projection (P1) prédéterminé sur le plan de commande sur lequel le capteur de force (6) est projeté, et le TCP.

2. Appareil de commande (10) selon la revendication 1, dans lequel
la commande (13) est configurée pour régler un angle de mouvement du premier objet (21) par rapport au second objet (22) sur la base d'un changement de direction d'un moment autour du capteur virtuel (VS) en commandant la position du premier objet (21) par rapport au second objet (22).

3. Appareil de commande (10) selon la revendication 2, dans lequel

le premier objet (21) a une troisième surface (213) différente de la première surface (211),
le second objet (22) a une quatrième surface (224) opposé à la troisième surface (213) dans la commande prédéterminée, et la quatrième surface (224) est différente de la deuxième surface (222), et
le TCP est défini à un point prédéterminé sur une ligne d'intersection entre la première surface (211) et la troisième surface (213) ou à une position sur le plan de commande à laquelle un point prédéterminé sur une surface de jonction reliant la première surface (211) et la troisième surface (213) est projeté.

4. Appareil de commande (10) selon la revendication 3, dans lequel

le premier objet (21) est un prisme ayant la première surface (211) et la troisième surface (213) contigües l'une à l'autre en tant que surfaces latérales du prisme,

le second objet (22) a un trou (23) ayant des surfaces intérieures comportant la deuxième surface (222) et la quatrième surface (224) contigües l'une à l'autre pour permettre une introduction du premier objet (21) dans le trou (23), et

la commande (13) est configurée pour aligner la première surface (211) du premier objet (21) avec la deuxième surface (222) du second objet (22) et la troisième surface (213) du premier objet (21) avec la quatrième surface (224) du second objet (22) dans la commande prédéterminée, et pour introduire le premier objet (21) dans le trou (23) du second objet (22).

5. Appareil de commande (10) selon la revendication 3 ou la revendication 4, dans lequel la commande (13) est configurée pour commander la position du premier objet (21) par rapport au second objet (22) pour amener une première force externe (F1) calculée par le capteur virtuel (VS) et agissant entre la première surface (211) et la deuxième surface (222) à être supérieure à une seconde force externe (F2) calculée par le capteur virtuel (VS) et agissant entre la troisième surface (213) et la quatrième surface (224) dans la commande prédéterminée.

6. Appareil de commande (10) selon la revendication 5, dans lequel la commande (13) est configurée pour commander la position du premier objet (21) par rapport au second objet (22) pour amener la seconde force externe (F2) à être égale à zéro dans la commande prédéterminée.

FIG. 1

FIG. 2

# FIG. 3

Control plane

FIG. 4Aa

FIG. 4Ab

FIG. 4Ac

FIG. 4Ad

EP 4 245 478 B1

FIG. 4Ba

213

224

Yht

Xht

222    CP1

211

213

224

FIG. 4Bb

Yht

Xht

222

211

18

FIG. 5A

FIG. 5B

FIG. 6

FIG. 7

```
                    ┌─────────────────┐
                    │      Start       │
                    └─────────────────┘
                             │
                             ▼            S101
                    ┌─────────────────┐
                    │  Input control   │
                    │   conditions     │
                    └─────────────────┘
                             │
        ┌────────────────────┤
        │                    ▼            S102
        │           ┌─────────────────┐
        │           │ Move first surface to │
        │           │ have contact under F1 │
        │           └─────────────────┘
        │                    │
        │                    ▼            S103
        │              ╱─────────────╲
        │  No         ╱   Reached F1?   ╲
        └────────────╲                 ╱
                      ╲───────────────╱
                             │
                            Yes
                             │
        ┌────────────────────┤
        │                    ▼            S104
        │           ┌─────────────────┐
        │           │ Move third surface to │
        │           │ have contact under F2 │
        │           └─────────────────┘
        │                    │
        │                    ▼            S105
        │              ╱─────────────╲
        │  No         ╱   Reached F2?   ╲
        └────────────╲                 ╱
                      ╲───────────────╱
                             │
                            Yes
                             │
                             ▼            S106
                    ┌─────────────────┐
                    │ Surface alignment │
                    │     process      │
                    └─────────────────┘
                             │
                             ▼            S107
                    ┌─────────────────┐
                    │  Orientation and  │
                    │ insertion processes │
                    └─────────────────┘
                             │
                             ▼
                    ┌─────────────────┐
                    │       End        │
                    └─────────────────┘
```

FIG. 8

```
                                    ┌─────────────┐
                                    │    Start    │
                                    └──────┬──────┘
                                           │
    ┌──────────────────────────────────┐  │
    │                                  ▼  ▼
    │                              ╱─────────────╲  ─── S201
    │                    No      ╱  Directions of Mz ╲
    │          ┌───────────────╱   and Rz different?  ╲
    │          │                ╲                     ╱
    │          │                  ╲─────────────────╱
    │          ▼                        │ Yes
    │      ┌────────────────────── S202 │
    │   ┌──┴──────────────────────────┐ │
    └───┤ Rz correction angle = Previous│ │
        │ value + ΔRz correction amount │ │
        └───────────────────────────────┘ │
                                           ▼
                                    ┌─────────────┐
                                    │     End     │
                                    └─────────────┘
```

FIG. 9

## FIG. 10A

## FIG. 10B

FIG. 10C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017159426 A
- JP 2013006231 A
- JP 2016043455 A
- US 2016052135 A

### Non-patent literature cited in the description

- kPAM 2.0: Feedback Control for Category-Level Robotic Manipulation. **GAO WEI et al.** IEEE ROBOTICS AND AUTOMATION LETTERS. IEEE, 25 February 2021, vol. 6